(19) Europäisches Patentamt
European Patent Office
Office européen des brevets

(11) **EP 1 330 492 B1**

(12) **FASCICULE DE BREVET EUROPEEN**

(45) Date de publication et mention
de la délivrance du brevet:
**07.10.2009   Bulletin 2009/41**

(51) Int Cl.:
**C08L 23/12** *(2006.01)*     **C08K 5/20** *(2006.01)*

(21) Numéro de dépôt: **01982441.6**

(86) Numéro de dépôt international:
**PCT/EP2001/012340**

(22) Date de dépôt: **24.10.2001**

(87) Numéro de publication internationale:
**WO 2002/034830 (02.05.2002 Gazette 2002/18)**

(54) **CAPSULES À VISSER FACONNES À PARTIR D'UNE COMPOSITION A BASE D'UN POLYMERE DU PROPYLENE**

SCHRAUBVERSCHLUSS AUS EINER POLYPROPYLENZUSAMMENSETZUNG

SCREW CAPS MADE OF A PROPYLENE POLYMER BASED COMPOSITION

(84) Etats contractants désignés:
**AT BE CH CY DE DK ES FI FR GB GR IE IT LI LU MC NL PT SE TR**

(30) Priorité: **27.10.2000   FR 0013965**

(43) Date de publication de la demande:
**30.07.2003   Bulletin 2003/31**

(73) Titulaire: **INEOS Manufacturing Belgium NV 2040 Antwerpen (BE)**

(72) Inventeurs:
• **LIBERT, Daniel
B-1490 Court-st-etienne (BE)**

• **VANDEN BERGHE, Pascal
B-1300 Limal (BE)**

(74) Mandataire: **Smith, Julian Philip Howard et al
Compass Patents LLP
120 Bridge Road
Chertsey
Surrey KT16 8LA (GB)**

(56) Documents cités:
**EP-A- 0 316 693          EP-A- 0 860 314
WO-A-00/39238          US-A- 5 362 782**

**Description**

L'invention concerne des capsules à visser mono-composant façonnés d'une composition à base d'un polymère du propylène. Elle concerne également un procédé de fabrication, de capsules à visser pour bouteilles à partir de cette composition.

Il est généralement connu de fabriquer des capsules pour bouteilles à partir de copolymères séquencés du propylène. Il est également connu d'incorporer dans le polypropylène un agent lubrifiant afin d'optimiser les propriétés de glissance et de faciliter le dévissage de la capsule. C'est ainsi que la demande de brevet WO 00/39238 décrit une fermeture de bouteilles comprenant une composition comprenant un copolymère séquencé du propylène contenant de l'érucamide. Toutefois, cette composition qui contient moins de 10 % en poids de copolymère propylène/éthylène ne convient pas pour la fabrication de capsules à visser dites mono-composant à cause d'une rigidité trop élevée. Les capsules décrites dans la demande de brevet WO 00/39238 doivent être munies d'une pastille souple à l'intérieur (bouchon bi-composants) afin d'en assurer l'étanchéité. En outre, cette composition présente le désavantage de procurer une mauvaise odeur et un mauvais goût aux aliments stockés en contact direct avec elle.

On a maintenant trouvé une composition à base d'un polymère du propylène qui ne présente pas ces problèmes et qui convient particulièrement bien pour la fabrication de capsules à visser mono-composant (bouchon mono-composant).

A cet effet, l'invention concerne des capsules à visser mono-composant façonnés d'une composition comprenant :

- 100 parties en poids d'un polymère du propylène comprenant
- de 84 à 70 % en poids par rapport au poids total du polymère du propylène d'un homopolymère cristallin du propylène (1) et,
- de 16 à 30 % en poids par rapport au poids total du polymère du propylène d'un copolymère de propylène et d'éthylène (2) contenant de 30 à 60 % en poids d'éthylène par rapport au poids du copolymère (2) et,
- de 0 à 2 parties en poids d'un amide d'acide gras saturé contenant de 8 à 30 atomes de carbone.

D'une manière préférée, la composition contient un homopolymère cristallin du propylène (1) dont l'indice d'isotacticité est d'au moins 97%.

L'indice d'isotacticité est apprécié par la fraction molaire de triades isotactiques (enchaînement séquencé de trois unités monomériques de propylène en configuration méso) et est déterminé par résonance magnétique nucléaire (RMN) en $^{13}$C comme décrit dans Macromolecules, volume 6, n° 6, pages 925-926 (1973) et dans les références (3) à (9) de cette publication. Des valeurs d'indice d'isotacticité de l'homopolymère du propylène (1) d'environ 98% donnent de bons résultats.

La composition mise en oeuvre dans la présente invention comprend préférentiellement au moins 18% en poids du copolymère de propylène et d'éthylène (2). De préférence, cette teneur ne dépasse pas 28% en poids par rapport au poids total du polymère du propylène. De manière particulièrement préférée, la quantité de copolymère de propylène et d'éthylène (2) ne dépasse pas 26 % en poids du poids total du polymère du propylène. Des polymères de propylène et d'éthylène (2) représentant au moins 20 % en poids du poids total du polymère du propylène donnent de bons résultats.

Dans le cadre de la présente invention la teneur en copolymère de propylène et de l'éthylène est calculée selon la méthode décrite ci-après en rapport avec les exemples.

Le polymère du propylène selon la présente invention est de préférence un élastomère thermoplastique. On entend par élastomère thermoplastique une matière plastique présentant à la fois les caractéristiques d'un thermoplastique et d'un élastomère. Un tel polymère a généralement une structure biphasique.

De bons résultats sont obtenus quand la teneur en éthylène du copolymère du propylène et de l'éthylène (2) (appelée ci-après Ec) est d'au moins 35 %. De préférence, cette teneur ne dépasse pas 50 % en poids par rapport au poids total du copolymère (2). Avantageusement, la teneur en éthylène Ec est d'au moins 38 % en poids par rapport au poids total du copolymère (2). D'une manière avantageuse, cette teneur ne dépasse pas 46 % en poids par rapport au poids du copolymère (2).

Dans le cadre de la présente invention, on entend désigner par teneur en éthylène Ec la teneur en éthylène calculée selon la méthode décrite ci-après en rapport avec les exemples.

Les compositions donnant de bons résultats ont un indice de fluidité en fondu, mesuré sous une charge de 2,16 kg à 230°C, suivant la norme ASTM D 1238, et appelé ci-après plus simplement MFI, d'au moins 5 g/10 min et qui ne dépasse pas 50 g/10 min. D'une manière plus préférée, le MFI des compositions est d'au moins 10 g/10 min, et plus particulièrement d'au moins 15 g/10 min. D'une manière plus préférée, ledit MFI ne dépasse pas 40 g/10 min, et plus particulièrement, il ne dépasse pas 30 g/10 min. Les valeurs de MFI de 18 à 25 g/10 min donnent des résultats particulièrement bons.

Le plus souvent, le polymère du propylène est caractérisé par un module en flexion mesuré selon la norme ISO 178, inférieur à 1600 MPa, en particulier de 800 à 1500 MPa; les valeurs de 1000 à 1400 MPa étant les plus préférées. Le module de flexion inférieur à 1600 MPa le rend particulièrement apte à être mis en oeuvre pour la fabrication de bouchons mono-composant.

Les polymères (1) et (2) constituent au moins 96 % en poids, de préférence au moins 98 % en poids, des polymères organiques contenus dans la composition. De préférence, les compositions ne contiennent pas d'autres polymères organiques que les polymères (1) et (2).

De manière particulièrement avantageuse, la composition comprend 100 parties en poids d'un polymère du propylène comprenant de 80 à 72 % en poids par rapport au poids total du polymère de propylène d'un homopolymère cristallin du propylène (1), et de 20 à 28 % en poids d'un polymère du propylène et d'éthylène (2) contenant de 35 à 50 % en poids d'éthylène par rapport au poids total du copolymère (2), ledit polymère du propylène étant caractérisé par un MFI de 18 à 25 g/10 min et un module en flexion de 1000 à 1400 MPa.

Le polymère du propylène comprenant lesdits homopolymère du propylène (1) et copolymère de propylène et d'éthylène (2) peut être obtenu en mélangeant les polymères séparément, par exemple à l'état fondu dans une extrudeuse, ou de manière préférée par polymérisation en deux étapes successives, par exemple en deux réacteurs en série et en présence de catalyseurs Ziegler-Natta particuliers. De manière particulièrement préférée, on prépare le polymère (1) dans une première étape de polymérisation, et le copolymère (2) dans une deuxième étape de polymérisation; les polymères ainsi obtenus sont appelés copolymères séquencés.

Les systèmes catalytiques préférés pour préparer les polymères du propylène selon l'invention comprennent :

- un solide catalytique comprenant, à titre de composants essentiels, du magnésium, du titane et du chlore,
- un composé organoaluminique, de préférence un trialkylaluminium, tout particulièrement le triéthylaluminium (TEA),
- un composé électrodonneur (électrodonneur externe) généralement choisi parmi les alkoxysilanes de formule $R^1_n Si(OR^2)_{4-n}$ dans laquelle $R^1$ représente un groupe hydrocarboné contenant de 1 à 12 atomes de carbone, $R^2$ représente un groupement hydrocarboné contenant de 1 à 8 atomes de carbone et n est 1, 2 ou 3.

Des alkoxysilanes préférés à titre d'électrodonneur externe sont les alkylalkoxy- et cycloalkylalkoxysilanes. Le dicyclopentyldiméthoxysilane (DCPDMS) est particulièrement préféré.

Les polymères du propylène peuvent être obtenus par n'importe quel procédé connu. Un procédé en phase gazeuse dans un lit fluidisé est préféré.

Les conditions générales de polymérisation sont bien connues de l'homme du métier. La température est généralement de 20 à 150 °C, de préférence de 40 à 95 °C, tout particulièrement de 50 à 75 °C. La polymérisation est généralement effectuée à une pression supérieure à la pression atmosphérique, de préférence de 10 à 50 $10^5$ Pa.

La masse moléculaire moyenne des polymères formés peut être réglée par l'addition d'un ou plusieurs agents de réglage connus de la masse moléculaire tel que l'hydrogène.

Les quantités requises de monomères et d'agent de réglage de la masse moléculaire peuvent être introduites de manière continue ou discontinue dans le milieu de polymérisation.

Les polymères peuvent éventuellement être soumis à un ou plusieurs traitements connus avec de l'eau, un alcool et/ou un diluant hydrocarboné pour l'élimination des résidus catalytiques et/ou des fractions de bas poids moléculaire.

La composition comprend préférentiellement au moins un amide d'acide gras saturé contenant de 8 à 30 atomes de carbone. Les amides d'acides gras saturés sont de préférence les amides d'acides gras linéaires représentés par la formule $CH_3(CH_2)_n CONH_2$ dans laquelle n = 6 à 28. Les amides d'acide gras saturés et linéaires contenant au moins 12 atomes de carbone et leurs mélanges sont recommandés. Le béhénamide (docosonamide, n=20) est particulièrement préféré.

La teneur en amide d'acide gras saturé dans la composition est plus particulièrement d'au plus 1,2 parties en poids pour 100 parties en poids du polymère du propylène. Généralement, cette teneur est d'au moins 0,1 partie en poids pour 100 parties en poids du polymère du propylène.

De préférence, cette teneur ne dépasse pas 1 partie en poids pour 100 parties en poids du polymère du propylène.

Outre le polymère du propylène et l'amide d'acide gras saturé, la composition peut également contenir des additifs usuels tels que les anti-oxydants, les anti-acides, les anti-UV, les colorants et les agents antistatiques. La teneur totale en additifs ne dépasse pas 5 % en poids; elle est de préférence inférieure à 4 % en poids.

La composition tout particulièrement préférée comprend :

- 100 parties en poids d'un polymère du propylène caractérisé par un MFI de 18 à 25 g/10 min et un module en flexion de 1000 à 1400 MPa et comprenant

- de 80 à 72 % en poids par rapport au poids total du polymère de propylène d'un homopolymère cristallin du propylène (1) et,
- de 20 à 28 % en poids d'un polymère du propylène et d'éthylène (2) contenant de 35 à 50 % en poids d'éthylène par rapport au poids total du copolymère (2),

- de 0,1 à 1 partie en poids de béhénamide.

Le MFI des compositions peut également, si nécessaire, être ajusté par mélange de préférence à l'état fondu, avec un peroxyde.

La composition peut être obtenue selon tout moyen connu adéquat. On peut par exemple procéder en deux étapes successives, la première consistant à mélanger le polymère du propylène, l'amide d'acide gras saturé et éventuellement un ou plusieurs additifs à température ambiante, la deuxième étape consistant à poursuivre le mélange en fondu dans une extrudeuse. La température de la deuxième étape est généralement de 130 à 300°C, en particulier de 150 à 270 °C, en plus particulier d'environ 200 à 250 °C. Une méthode alternative consiste à introduire l'amide d'acide gras saturé et éventuellement les autres composés dans le copolymère séquencé du propylène déjà fondu.

On peut aussi préparer, dans un premier temps, un mélange-maître comprenant une première fraction de polymère du propylène, l'amide d'acide gras saturé et éventuellement les autres additifs, ce mélange-maître étant riche en amide d'acide gras saturé et optionnellement en autres composés. Ce mélange-maître est ensuite mélangé à la fraction restante du polymère du propylène, par exemple lors de la fabrication de granules de la composition.

La composition présente à la fois de bonnes propriétés de glissance, qui la rendent apte à être utilisée pour la fabrication de capsules à visser pour bouteilles, et de bonnes propriétés organoleptiques, qui la rendent utilisable dans des applications alimentaires.

La composition convient pour la mise en oeuvre par tous les procédés classiques de fabrication d'objets façonnés en polypropylène et plus particulièrement par les procédés d'extrusion, d'extrusion-soufflage, d'extrusion-thermoformage et d'injection. Elle donne des résultats très satisfaisants lors de la fabrication d'objets façonnés par injection, en particulier de capsules à visser pour bouteilles.

Dès lors, la présente invention concerne également un procédé de fabrication de capsules pour bouteilles, par injection de cette composition. Selon ce procédé, ladite composition, généralement sous forme de granules, est introduite dans une extrudeuse dans laquelle elle est fondue au moyen d'une unité de plastification. On obtient de bons résultats avec des extrudeuses mono-vis. Les températures du fourreau et de la vis sont généralement comprises entre 100°C et 350°C, particulièrement entre 130°C et 320°C, plus particulièrement entre 230°C et 280°C. Pendant la phase de plastification, la composition à l'état fondu est accumulée devant la pointe de la vis. Ensuite, elle est injectée rapidement dans un moule refroidi. Directement après cette phase de remplissage, la composition est maintenue sous pression afin de compenser son retrait. Après un refroidissement court, les objets façonnés sont éjectés lors de l'ouverture du moule. Les capsules fabriquées par ce procédé conviennent pour être utilisées pour la fermeture de bouteilles, plus particulièrement pour des bouteilles contenant des aliments, par exemple des boissons non gazeuses. Elles sont très avantageusement utilisées pour les bouchons mono-composant.

Les exemples dont la description suit, servent à illustrer l'invention. La signification des symboles utilisés dans ces exemples, les unités exprimant les grandeurs mentionnées et les méthodes de mesure de ces grandeurs sont explicitées ci-dessous.

MFI = indice de fluidité en fondu, exprimé en g/10 min, mesuré à 230°C sous une charge de 2,16 kg selon la norme ASTM D 1238 (1998).

Et = teneur totale en éthylène du polymère du propylène exprimée en % en poids et mesurée par spectrométrie infra-rouge sur des films d'une épaisseur de 400 $\mu$m et définie comme étant la somme des teneurs relatives en éthylène qui sont évaluées par l'absorbance des bandes caractéristiques à 720 cm$^{-1}$ et à 740 cm$^{-1}$.

Teneur en fraction soluble dans le m-xylène à 25°C exprimée en % en poids : 3 g de polymère sont mis en solution dans 200 ml de m-xylène à température d'ébullition. La solution est refroidie à 25°C pendant 30 minutes dans un bain d'eau et filtrée ensuite sur un filtre en papier. Le filtrat est évaporé et le résidu est séché dans une étuve à vide.

Fc = teneur en copolymère du propylène et de l'éthylène (2) exprimée en % en poids et calculée en utilisant l'équation suivante :

$$Fc = \frac{100 \times (XS - XS_1)}{(XS_2 - XS_1)}$$

dans laquelle

| | |
|---|---|
| XS = | fraction soluble dans le m-xylène à 25°C du polymère du propylène selon l'invention, exprimée en % en poids, |
| XS$_1$ = | fraction soluble dans le m-xylène à 25°C de l'homopolymère cristallin du propylène (1) selon l'invention exprimée en % en poids; dans le cas des copolymères séquencés, cette valeur est mesurée sur un échantillon prélevé au premier réacteur, |
| XS$_2$ = | fraction soluble dans le m-xylène à 25°C du copolymère de propylène et de l'éthylène (2) selon l'invention exprimée en % en poids; dans le cas des copolymères séquencés, cette valeur est mesurée sur un échantillon de copolymère de propylène et de l'éthylène (2) préparé à cet effet et obtenu dans les mêmes conditions de polymérisation. |
| Ec = | teneur en éthylène du copolymère de propylène et de l'éthylène (2) exprimée en % en poids et calculée en utilisant la relation suivante : |

$$Ec = \frac{100 \times Et}{Fc}$$

| | |
|---|---|
| Flex.mod. = | le module d'élasticité en flexion, exprimé en MPa, mesuré à 23 °C, sur une éprouvette injectée, d'une épaisseur de 4 mm, suivant la norme ISO 178. |

Exemple 1

Un copolymère séquencé du propylène a été obtenu par polymérisation en phase gazeuse à 65°C dans un lit fluidisé et en deux étapes successives à l'aide d'un catalyseur comprenant 2,6 % en poids de Ti provenant du TiCl$_4$ et 11 % en poids de diisobutylphtalate supportés sur du MgCl$_2$ et commercialisé sous le nom de SHAC®320, du TEA et du DCPDMS comme donneur d'électrons, avec un rapport atomique Al/Si=2 et un rapport atomique Al/Ti=100. Les conditions de polymérisation sont reprises dans le tableau 1 ci-après.

Les caractéristiques du copolymère séquencé du propylène ainsi fabriqué se trouvent dans le tableau 2 ci-après. Une valeur de XS$_2$ de 88 % en poids a été mesurée dans le cas d'un copolymère de propylène et de l'éthylène (2) obtenu dans les mêmes conditions.

Dans une extrudeuse, on a mélangé (à 220 °C) et granulé une composition constituée de :

- 99,775 parties en poids du copolymère séquencé du propylène décrit ci-dessus;
- 0,075 partie en poids d'agent anti-acide (stéarate de calcium);
- 0,15 partie en poids de stabilisant constitué d'un tiers en poids de pentaérythrityl tétrakis (3,5-di-tertiair-butyl-4-hydroxyphénylpropionate) et de deux tiers en poids de tris(2,4-di-tertiair-butyl-phényl)phosphite.

Les granules présentaient un Flex.mod., mesuré une semaine après l'injection, de 1084 MPa.

Exemple 2

On a répété les opérations de l'exemple 1 en utilisant un copolymère séquencé du propylène obtenu dans les conditions de polymérisation qui se trouvent dans le tableau 1 et dont les caractéristiques sont reprises dans le tableau 2. Une valeur de XS$_2$ de 89,8 % en poids a été mesurée dans le cas d'un copolymère de propylène et de l'éthylène (2) obtenu dans les mêmes conditions.

Les granules présentaient un Flex.mod., mesuré une semaine après l'injection, de 1257 MPa.

Tableau 1

| Condition/Caractéristique | Unité | Exemple 1 | Exemple 2 |
|---|---|---|---|
| Premier réacteur | | | |
| Température | °C | 65 | 65 |
| Pression | MPa | 3,2 | 3,2 |
| Temps de séjour | h | 1,8 | 2,6 |

**EP 1 330 492 B1**

(suite)

| Condition/Caractéristique | Unité | Exemple 1 | Exemple 2 |
|---|---|---|---|
| Premier réacteur | | | |
| MFI | g/10 min | 48 | 46 |
| Deuxième réacteur | | | |
| Température | °C | 65 | 65 |
| Pression | MPa | 2,0 | 2,0 |
| Temps de séjour | h | 0,9 | 0,9 |
| Propylène/éthylène | mol/mol | 1,44 | 1,34 |
| MFI | g/10 min | 19,2 | 22,1 |

Tableau 2

| Caractéristique | Unité | Exemple 1 | Exemple 2 |
|---|---|---|---|
| Premier réacteur | | | |
| $XS_1$ | % poids | 1,5 | 1,5 |
| Deuxième réacteur | | | |
| $XS_2$ | % poids | 88,0 | 89,8 |
| Copolymère séquencé | | | |
| XS | % poids | 23,1 | 20,0 |
| Fc | % poids | 25 | 21 |
| Et | % poids | 10,5 | 8,4 |
| Ec | %poids | 42 | 40,2 |
| MFI | g/10 min | 19,2 | 22,1 |

**Revendications**

1. Capsules à visser mono-composant façonnés d'une composition comprenant:

   - 100 parties en poids d'un polymère du propylène comprenant
   - de 84 à 70 % en poids par rapport au poids total du polymère du propylène d'un homopolymère cristallin du propylène (1) et,
   - de 16 à 30 % en poids par rapport au poids total du polymère du propylène d'un copolymère de propylène et d'éthylène (2) contenant de 30 à 60 % en poids d'éthylène par rapport au poids du copolymère (2) et,
   - de 0 à 2 parties en poids d'un amide d'acide gras saturé contenant de 8 à 30 atomes de carbone.

2. Capsules selon la revendication 1, dans laquelle le polymère du propylène a un module en flexion à 23°C (ISO 178) inférieur à 1600 MPa.

3. Capsules selon l'une quelconque des revendications 1 à 2 comprenant 100 parties en poids d'un polymère du propylène comprenant de 80 à 72 % en poids par rapport au poids total du polymère de propylène d'un homopolymère cristallin du propylène (1), et de 20 à 28 % en poids d'un polymère du propylène et d'éthylène (2) contenant de 35 à 50 % en poids d'éthylène par rapport au poids total du copolymère (2), ledit polymère du propylène étant **caractérisé par** un MFI (ASTM D 1238 (1998), 2,16 kg/230°C) de 18 à 25 g/10 min et un module en flexion à 23°C (ISO 178) de 1000 à 1400 MPa.

4. Capsules selon l'une quelconque des revendications 1 à 3 contenant au moins un amide d'acide gras saturé choisi parmi les amides d'acides gras saturés linéaires contenant au moins 12 atomes de carbone, et leurs mélanges.

**5.** Capsules selon l'une quelconque des revendications 1 à 4, dans laquelle l'amide d'acide gras saturé est le béhénamide.

**6.** Capsules selon l'une quelconque des revendications 1 à 5 comprenant :

- 100 parties en poids d'un polymère du propylène **caractérisé par** un MFI (ASTM D 1238 (1998), 2,16 kg /230°C) de 18 à 25 g/10 min et un module en flexion à 23°C (ISO 178) de 1000 à 1400 MPa et comprenant
- de 80 à 72 % en poids par rapport au poids total du polymère de propylène d'un homopolymère cristallin du propylène (1) et,
- de 20 à 28 % en poids d'un polymère du propylène et d'éthylène (2) contenant de 35 à 50 % en poids d'éthylène par rapport au poids total du copolymère (2),
- de 0,1 à 1 partie en poids de béhénamide.

**7.** Procédé de fabrication de capsules à visser mono-composant par injection d'une composition à base de polymère du propylène conforme à l'une quelconque des revendications 1 à 6.

**8.** Utilisation des capsules selon l'une quelconque des revendications 1 à 6 pour la fabrication de fermetures pour bouteilles.


**Claims**

**1.** Single-component screw caps with a composition comprising:

- 100 parts by wt of a propylene polymer comprising
- from 84 to 70 wt %, compared with the total weight of the propylene polymer, of a crystalline propylene homopolymer (1) and
- from 16 to 30 wt %, compared with the total weight of the propylene polymer, of a propylene and ethylene copolymer (2) containing from 30 to 60 wt % of ethylene compared with the weight of the copolymer (2) and
- from 0 to 2 parts by wt of a saturated fatty acid amide containing from 8 to 30 carbon atoms.

**2.** Caps according to claim 1, in which the propylene polymer has a modulus in flexure at 23 °C (ISO 178) of less than 1600 MPa.

**3.** Caps according to any one of claims 1 to 2 containing 100 parts by wt of a propylene polymer comprising from 80 to 72 wt %, compared with the total weight of the propylene polymer, of a crystalline propylene homopolymer (1) and from 20 to 28 wt % of a propylene and ethylene polymer (2) containing from 35 to 50 wt % of ethylene compared with the total weight of the copolymer (2), said propylene polymer being **characterised by** an MFI (ASTM D 1238 (1998), 2.16 6 kg/230 °C) of 18 to 25 g/10 min and a modulus in flexure at 23 °C (ISO 178) of 1000 to 1400 MPa.

**4.** Caps according any one of claims 1 to 3 containing at least one saturated fatty acid amide chosen from linear saturated fatty acid amides containing at least 12 carbon atoms, and their mixtures.

**5.** Caps according to any one of claims 1 to 4, in which the saturated fatty acid amide is behenamide.

**6.** Caps according to any one of claims 1 to 5, comprising:

- 100 parts by wt of a propylene polymer **characterised by** an MFI (ASTM D 1238 (1998), 2.16 kg/230 °C) of 18 to 25 g/10 min and a modulus in flexure at 23 °C (ISO 178) of 1000 to 1400 MPa and comprising
- from 80 to 72 wt %, compared with the total weight of the propylene polymer, of a crystalline propylene homopolymer (1) and
- from 20 to 28 wt % of a propylene and ethylene polymer (2) containing from 35 to 50 wt % of ethylene compared with the total weight of the copolymer (2) and
- from 0.1 to 1 part by wt of behenamide.

**7.** Process for manufacturing single-component screw caps by injection with a propylene polymer based composition according to any one of claims 1 to 6.

8. Use of the caps according to any one of claims 1 to 6 for the manufacture of closures for bottles.


**Patentansprüche**

1. Einkomponenten-Schraubverschluss aus einer Zusammensetzung umfassend:

   - 100 Gewichtsteile eines Propylenpolymers umfassend
   - 84 bis 70 Gew.-% bezogen auf das Gesamtgewicht des Propylenpolymers eines kristallinen Propylenhomopolymers (1) und,
   - 16 bis 30 Gew.-% bezogen auf das Gesamtgewicht des Propylenpolymers eines Propylen- und Ethylencopolymers (2) enthaltend 30 bis 60 Gew.-% Ethylen bezogen auf das Gewicht des Copolymers (2) und,
   - 0 bis 2 Gewichtsteile eines gesättigten Fettsäureamids mit 8 bis 30 Kohlenstoffatomen.

2. Verschlüsse gemäß Anspruch 1, bei dem das Propylenpolymer ein Biegemodul bei 23 °C (ISO 178) von kleiner 1600 MPa aufweist.

3. Verschlüsse gemäß einem der Ansprüche 1 bis 2 umfassend 100 Gewichtsteile eines Propylenpolymers mit 80 bis 72 Gew.-% bezogen auf das Gesamtgewicht des Propylenpolymers eines kristallinen Propylenhomopolymers (1), und 20 bis 28 Gew.-% eines Propylen- und Ethylenpolymers (2) enthaltend 35 bis 50 Gew.-% Methylen bezogen auf das Gesamtgewicht des Copolymers (2), wobei das Propylenpolymer einen Schmelzflußindex (gemäß ASTM D 1238 (1998), 2,16 kg/230 °C) von 18 bis 25 g/10 min und ein Biegemodul bei 23 °C (ISO 178) von 1000 bis 1400 MPa aufweist.

4. Verschlüsse gemäß einem der Ansprüche 1 bis 3 enthaltend mindestens ein gesättigtes Fettsäureamid ausgewählt aus linearen gesättigten Fettsäureamiden mit mindestens 12 Kohlenstoffatomen, und Mischungen davon.

5. Verschlüsse gemäß einem der Ansprüche 1 bis 4, wobei das gesättigte Fettsäureamid ein Behenamid ist.

6. Verschlüsse gemäß einem der Ansprüche 1 bis 5 umfassend:

   - 100 Gewichtsteile eines Propylenpolymers mit einem Schmelzflußindex (gemäß ASTM D 1238 (1988), 2,16 kg/230 °C) von 18 bis 25 g/10 min und einem Biegemodul bei 23 °C (ISO 178) von 1000 bis 1400 MPa, und umfassend
   - 80 bis 72 Gew.-% bezogen auf das Gesamtgewicht des Propylenpolymers eines kristallinen Propylenhomopolymers (1), und
   - 20 bis 28 Gew.-% eines Propylen- und Ethylenpolymers (2) beinhaltend 35 bis 50 Gew.-% Ethylen, bezogen auf das Gesamtgewicht des Copolymers (2),
   - 0,1 bis 1 Gewichtsteile Behenamid.

7. Herstellungsverfahren der Einkomponenten-Schraubverschlüsse durch Injektion einer Propylenpolymerzusammensetzung gemäß einem der Ansprüche 1 bis 6.

8. Verwendung der Verschlüsse gemäß einem der Ansprüche 1 bis 6 für die Herstellung von Flaschenverschlüssen.

**EP 1 330 492 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0039238 A

**Littérature non-brevet citée dans la description**

- *Macromolecules,* 1973, vol. 6 (6), 925-926